(19) Europäisches Patentamt
European Patent Office
Office européen des brevets

(11) **EP 3 226 201 A1**

(12) **EUROPEAN PATENT APPLICATION**
published in accordance with Art. 153(4) EPC

(43) Date of publication:
**04.10.2017 Bulletin 2017/40**

(51) Int Cl.:
***G06Q 50/26*** (2012.01)

(21) Application number: **16876970.1**

(22) Date of filing: **09.05.2016**

(86) International application number:
**PCT/CN2016/081389**

(87) International publication number:
**WO 2017/133110 (10.08.2017 Gazette 2017/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.02.2016 CN 201610073733**

(71) Applicant: **Southeast University**
**Nanjing, Jiangsu 210096 (CN)**

(72) Inventors:
• **YANG, Junyan**
  **Nanjing**
  **Jiangsu 210096 (CN)**
• **XIONG, Weiting**
  **Nanjing**
  **Jiangsu 210096 (CN)**
• **SHI, Yi**
  **Nanjing**
  **Jiangsu 210096 (CN)**

(74) Representative: **Zinnecker, Armin**
**Lorenz Seidler Gossel**
**Rechtsanwälte Patentanwälte**
**Partnerschaft mbB**
**Widenmayerstraße 23**
**80538 München (DE)**

(54) **URBAN DYNAMIC SPATIAL STRUCTURE CIRCLE LAYER DEFINITION METHOD**

(57) Disclosed in the present invention is a method for defining circles of a dynamic urban spatial structure, which includes the following steps: collecting mobile phone user location data; cleaning and processing the data, to obtain matched mobile phone user location data; merging, by taking a base station as a unit, matched mobile phone user location data on all hours into mobile phone location data on each day according to dates; for merged base station information, through a Tyson Polygon processing method, spatially positioning, within a whole city, base stations each serving the different numbers of users; proportionally allocating, according to the area of each land block, data of the numbers of users in polygons to blocks covered by the polygons, to obtain the number of mobile phone users in each land block; and obtaining, through a spatial analysis method of the Kriging interpolation method in ArcGIS, a numerical rule of multi-circle distribution of mobile phone users at each time point and on each day, then finding numerical critical points, and merging circles within a same region, to generate a distribution diagram of the circles of the dynamic urban spatial structure. The present invention fully relies on existing mobile communication network resources, and has advantages of low cost, high frequency, automation, high accuracy, and numerous samples.

FIG.1

**Description**

**BACKGROUND OF THE INVENTION**

**Field of the Invention**

The present invention relates to the field of mobile phone signaling information collection and processing technologies, and more particularly to a processing and deconstruction method for defining of circles of a dynamic urban spatial structure based on mobile phone user location data.

**Description of Related Art**

Rapid development of information technologies brings about arrival of the "big data" age, changes urban spatial organizations, and makes innovation in a research method of an urban spatial structure. Traditional resolution on an urban spatial structure starts from and falls into a material space. The big data of mobile phone signaling in the background of the information age not only can intuitively and truly reflect a urban spatial form, but also makes a research perspective start from persons and fall into a space. Thus, a research on an urban space is not just confined to the material space. Therefore, in the big data age, using information data to do a research on an urban spatial structure provides a new direction and idea for the current research on a urban space, and is of great significance in reconstructing and enriching urban planning discipline theories and in guiding urban planning and construction.
Up to now, there are many methods for defining circles of a urban spatial structure in the field of urban planning, and an empirical analysis for each city is an important part of a planning practice. However, the existing defining methods mostly carry out the research based on a static urban spatial structure, and are oriented around a static material space, which causes a single applicable range and makes it difficult to track and investigate a dynamic urban structure. Comprehensively, current defining on circles of an urban spatial structure is inapplicable to a sustainable analysis on a dynamic spatial structure, and mainly includes the following defects:

(1) for a preliminary research work, a lot of manpower, material resources, and financial resources needs to consumed, and a relatively long implementation period is required;

(2) due to a lot of consumption and a long research time interval, data update is delayed so that a current real situation of a city cannot be reflected in time; and

(3) a workload of inputting research results is heavy; and further, it is difficult to unify accuracy and standard degrees of the results such that there may be a big artificial error, so it is difficult to provide a support for an optimization strategy of urban planning.

The method is generally applicable to an analysis on circles of a static urban spatial structure, and is difficultly sustained in a time dimension.

**SUMMARY OF THE INVENTION**

Invention objective: In view of the problems in the prior art, the present invention provides a method for defining circles of a dynamic urban spatial structure based on mobile phone location data, which is low in cost and high in accuracy and has a large number of samples and strong timeliness.
Technical solutions: to achieve the foregoing invention objective, the present invention adopts the following technical solutions:

A method for defining circles of a dynamic urban spatial structure includes the following steps:

(1) collecting mobile phone user location data;

(2) cleaning and processing the data: cleaning and filtering the mobile phone user location data to delete failure location data, an exception and a burst; matching the mobile phone user location data to corresponding base station cells according to latitude and longitude coordinates of the mobile phone user location data; and establishing a subordination relationship between each piece of the mobile phone user location data and a base station cell, to obtain matched mobile phone user location data;

(3) based on the matched mobile phone user location data and by taking a day as a basic unit, merging and counting matched mobile phone user location data on all hours in a unit of a day, to obtain two research databases: basic data on each hour and whole data on each day;

(4) matching between base stations and land block data: based on the mobile phone user location data on each day and on each hour in the previous step, through the Tyson Polygon method in ArcGIS, proportionally allocating the numbers of mobile phone users under base stations according to the area of each land block; by taking a block as a basic unit, counting and adding up the numbers of users under base stations within a same block; and processing matched mobile phone location data of all users according to the foregoing method, to obtain mobile phone user location data on different hours and on different days within land blocks of a whole city;

(5) resolving the dynamic urban spatial structure on different hours: based on the processed mobile phone user location data falling in the blocks, and by taking the number of users and user density as basic processing units, inputting, in two kinds of dimensions such as an hour dimension and a day dimension, block data into ArcGIS as a basic analysis database; performing spatial distribution trend analysis of the number of located mobile phone users in each block in the whole city through the Kriging interpolation method in ArcGIS, to obtain a basic circle trend diagram of population-based spatial structure distribution in the whole city on different hours and on different days; in one hand, excluding an exceptional value from this circle distribution situation and performing manual detection on the circle distribution situation, to obtain a relatively accurate circle division diagram; and in addition, performing space superposition based on changes in the circle trend diagram on the hours, to form an analysis basis of the dynamic urban structure, where the user density = the number of users in each block/the basal area of the block;

(6) identifying the circles of the dynamic urban spatial structure: obtaining a value of distribution density of mobile phone users in each circle according to the distribution situation of the number of mobile phone users in each basic circle in the previous step; and in addition, performing statistical analysis for a change rule of this value, and calculating percentages of change trends of values of user distribution density in two adjacent circles, to find numerical inflection points, which are critical values for division of the circles of the dynamic urban spatial structure; and

(7) outputting and analyzing the circles of the dynamic urban spatial structure: outputting a structural diagram of circles obtained on each hour and on each working day in a two-dimensional diagram in a visible and vectorized manner through ArcGIS, to obtain a change trend of the circles of the dynamic urban spatial structure; and then performing comparison and analysis to find a change rule and predict a future change situation.

The contents of the data collected in step (1) include the following information: an anonymous encrypted mobile phone terminal ID, signaling occurring time, a serving base station during signaling occurrence, and the like; the types of the data include: turning on/off the mobile phone, sending/receiving an SMS message, calling, being called, location updating, cell switching, and Internet accessing.

In step (4), in a case in which it is difficult to count and identify users on a road, the users are divided in number into land blocks on two sides along a central line of the road.

The beneficial effects are as follows: The present invention systematically provides a solution of a method for defining circles of a dynamic urban spatial structure through mobile phone user location data. The method has obvious advantages such as strong practicality, an efficient algorithm, and unified results, so that the urban spatial structure can be resolved more objectively, more truly, and in lower cost, and data can be updated more frequently. Therefore, the method is suitably popularized and applied in various cities and has a broad prospect. The specific performance is as follows:

1. In a rapid urbanization process, it is required to timely monitor and update changes in a urban spatial form, so as to meet requirements of urban planning. The method of the present invention provides a new technical means for defining circles of the dynamic urban spatial structure, which can constantly tracks an evolution rule of the circles of the dynamic urban space by making full use of numerous samples of mobile phone user location data and establishing a sustainable observation and monitoring mechanism and by means of ArcGis spatial analysis; therefore, the present invention can embody real features of the urban spatial structure by taking a person as a monitoring unit, achieve a high sample rate, and truly reflect circle distribution of the urban spatial structure.

2. In the method for defining circles of the dynamic urban spatial structure based on the mobile phone user location data of the present invention, the data originates from the mobile phone user location data, is acquired by taking a block as a basic unit, and includes the total number of users in each block, user density, a general spatial distribution trend, temporal and spatial distribution change characteristics, and so on. Therefore, the cost is relatively low, mobile communication infrastructures are fully used, additional manpower for research is not required; an automated implementation manner is used, and collection and analysis are performed based on computer data; there is a large number of samples, which can basically cover the region of a whole city; and data is updated in a short period and is highly dynamic, thereby achieving a more humanized urban planning service.

**BRIEF DESCRIPTION OF THE DRAWINGS**

FIG. 1 is a flowchart of a method of the present invention;

FIG. 2 shows distributed base stations of a communication service provider of Shanghai and division of signaling cells in the present invention;

FIG. 3 is a distribution diagram showing density of mobile phone users in all blocks of the whole Shanghai city in an embodiment of the present invention;

FIG. 4 is a distribution diagram showing a circle trend obtained according to density of mobile phone users in the whole Shanghai city in an embodiment of the present invention;

FIG. 5 is a diagram showing critical values of circles of a urban spatial structure of Shanghai in an embodiment of the present invention; and

FIG. 6 is a final circle division diagram of the urban spatial structure of Shanghai in an embodiment of the present invention.

**DETAILED DESCRIPTION OF THE INVENTION**

The technical solutions of the present invention are described in detail below with reference to the accompanying drawings and an example in which circles of a dynamic urban spatial structure are defined based on mobile phone user location data within the urban administrative region of Shanghai (excluding the three islands: Chongming Island, Changxing Township and Hengsha Township, where a spatial distribution range of the urban administrative region covers the central urban region of Shanghai and new towns surrounding it, and the area is about 6540 $km^2$).

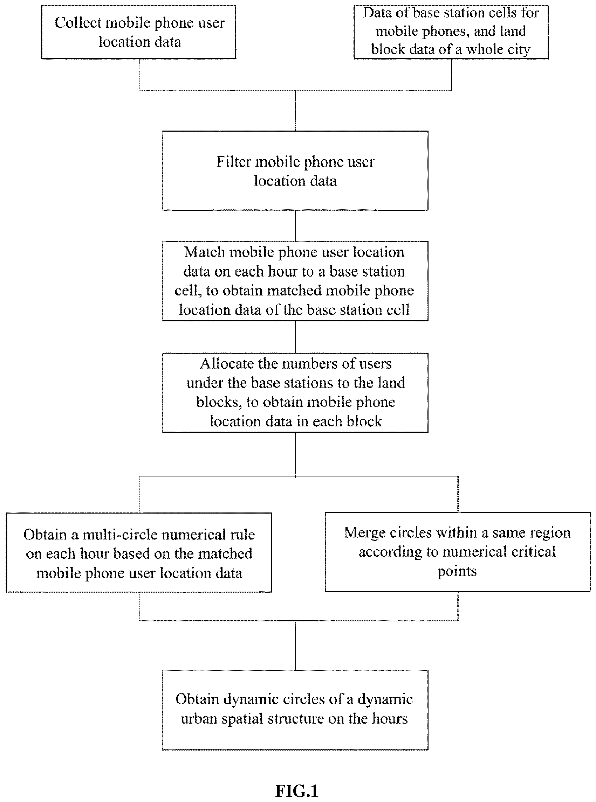

A method for defining circles of a dynamic urban spatial structure includes the following steps (FIG. 1):

(1) Collect mobile phone user location data.
Mobile phone signaling data selected in this example is anonymous encrypted data, where the contents of the data mainly include the following information: an anonymous encrypted mobile phone terminal ID, signaling occurring time, a serving base station during signaling occurrence, and the like; and the types of the data include: turning on/off the mobile phone, sending/receiving an SMS message, calling, being called, location updating, cell switching, Internet accessing, and so on. A spatial range of the data is the municipal administrative region of Shanghai (including 16 districts and one county); a time range is four typical working days (Wednesday or Thursday), four typical weekends (Sunday), and one typical holiday in all from 2012 to 2013; and a data amount per day is about 1.5 billion pieces.

(2) Clean and process the data.
The mobile phone user location data is cleaned and filtered to delete failure location data, an exception and a burst; the mobile phone user location data is matched to corresponding base station cells according to latitude and longitude coordinates of the mobile phone user location data through a coordinate transformation method; and a subordination relationship is established between each piece of the mobile phone user location data and a base station cell, to obtain matched mobile phone user location data.

(3) Based on the matched mobile phone user location data and by taking a day as a basic unit, matched mobile phone user location data on all hours is merged and counted in a unit of a day, to obtain two research databases: basic data on each hour and whole data on each day.

(4) Perform matching between base stations and land block data.

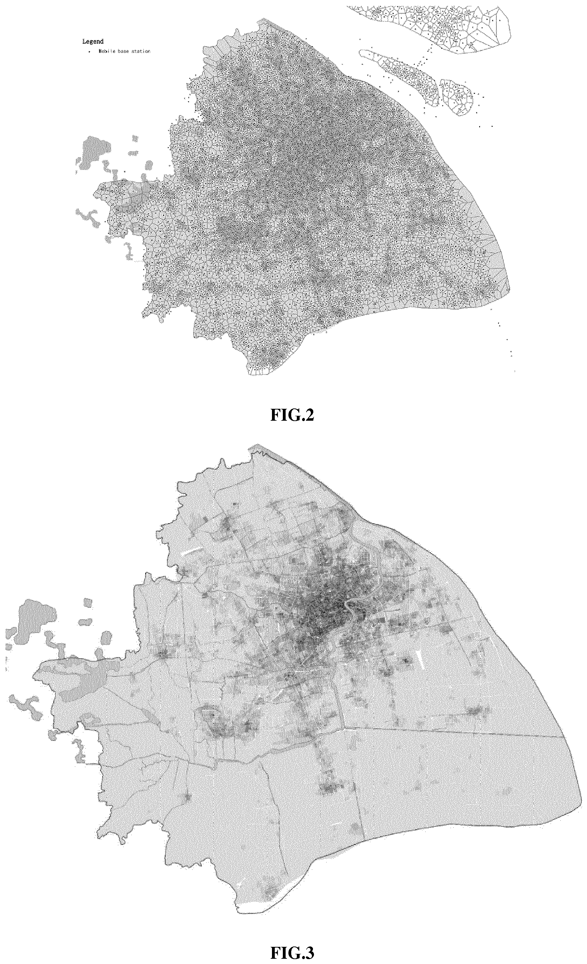

Based on the mobile phone user location data on each day and on each hour in the previous step, through the Tyson Polygon method in ArcGIS, the numbers of mobile phone users under base stations are proportionally allocated according to the area of each land block, where a deeper color in the figure indicates higher density of the mobile phone users, and vice versa (FIG. 2). Because it is difficult to count and identify users on a road, the users are divided in number into land blocks on two sides along a central line of the road. In addition, by taking a block as a basic unit, the numbers of users under base stations within a same block are counted and added up (FIG. 3). Matched mobile phone location data of all users is processed according to the foregoing method, to obtain mobile phone user location data on different hours and on different days within land blocks of a whole city.

(5) Resolve the dynamic urban spatial structure on different hours.

Based on the processed mobile phone user location data falling in the blocks, and by taking the number of users and user density as basic processing units, block data is input, in two kinds of dimensions such as an hour dimension and a day dimension, into ArcGIS as a basic analysis database.

$$\text{The user density} = \text{the number of users in each block/the basal area of the block.}$$

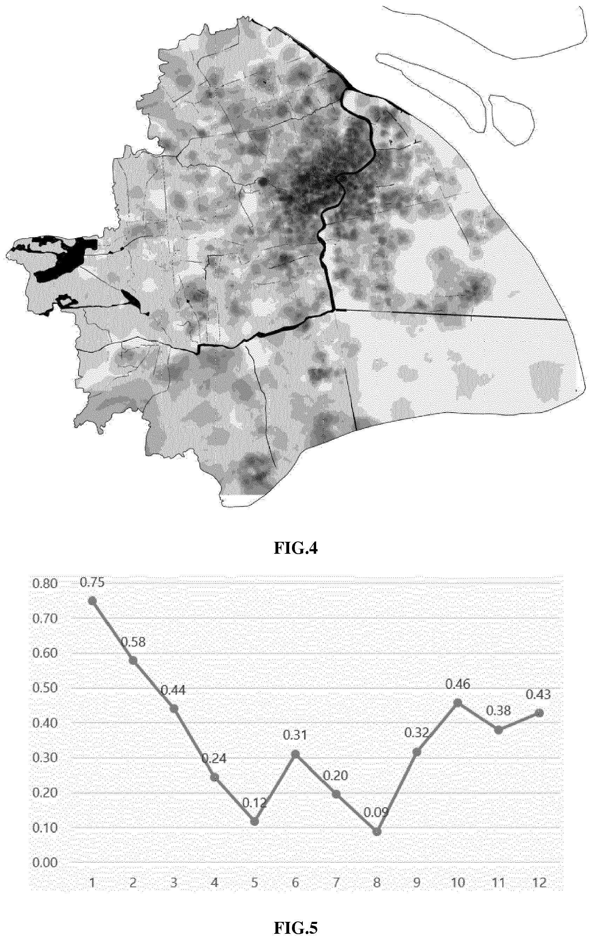

Spatial distribution trend analysis of number of mobile phone users in each block in the whole city is performed through the Kriging interpolation method in ArcGIS, to obtain a basic circle trend diagram of population-based spatial structure distribution in the whole city on different hours and on different days. As for the Shanghai city, thirteen circles that radially expand from the city center to the periphery are obtained (FIG. 4). In one hand, an exceptional value is excluded from this circle distribution situation and manual detection is performed on the circle distribution situation, to obtain a relatively accurate circle division diagram; and in addition, space superposition is performed based on changes in the circle trend diagram on the hours, to form an analysis basis of the dynamic urban structure. Such circle defining has long been a significant work in a urban planning practice such as urban overall planning.

(6) Identify the circles of the dynamic urban spatial structure.

A value of distribution density of mobile phone users in each circle is obtained according to the distribution situation of the number of mobile phone users in each basic circle in the previous step; and in addition, statistical analysis is performed for a change rule of this value, and percentages of change trends of values of user distribution density in two adjacent circles are calculated, to find value inflection points, which are critical values for division of the circles of the dynamic urban spatial structure. As for the Shanghai city, there are three circle inflection points and therefore four circles are identified finally (FIG. 5).

(7) Output and analyze the circles of the dynamic urban spatial structure.

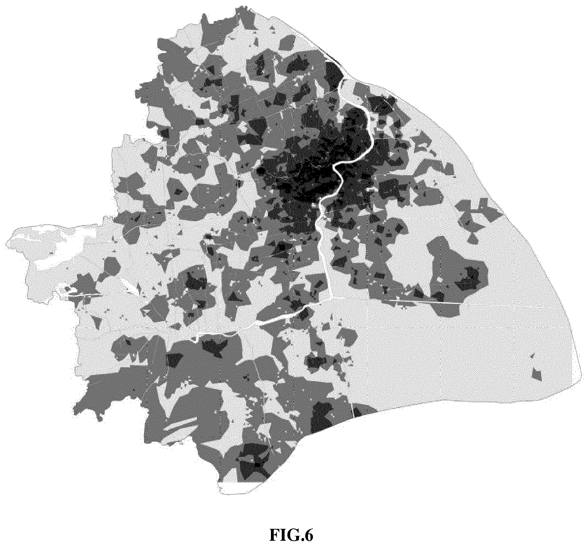

A structural diagram of circles obtained on each hour and on each working day is output in a two-dimensional diagram in a visible and vectorized manner through ArcGIS. As shown in the figure, four-level circles are divided according to different shades (FIG. 6), to obtain a change trend of the circles of the dynamic urban spatial structure; and then comparison and analysis are preformed to find a change rule and predict a future change situation.

**Claims**

1. A method for defining circles of a dynamic urban spatial structure comprises the following steps:

   (1) collecting mobile phone user location data;
   (2) cleaning and processing the data: cleaning and filtering the mobile phone user location data to delete failure location data, an exception and a burst; matching the mobile phone user location data to corresponding base station cells according to latitude and longitude coordinates of the mobile phone user location data; and establishing a subordination relationship between each piece of the mobile phone user location data and a base station cell, to obtain matched mobile phone user location data;
   (3) based on the matched mobile phone user location data and by taking a day as a basic unit, merging and counting matched mobile phone user location data on all hours in a unit of a day, to obtain two research databases: basic data on each hour and whole data on each day;
   (4) matching between base stations and land block data: based on the mobile phone user location data on each day and on each hour in the previous step, through the Tyson Polygon method in ArcGIS, proportionally allocating the numbers of mobile phone users under base stations according to the area of each land block; by taking a block as a basic unit, counting and adding up the numbers of users under base stations within a same block; and processing matched mobile phone location data of all users according to the foregoing method, to obtain mobile phone user location data on different hours and on different days within land blocks of a whole city;

(5) resolving the dynamic urban spatial structure on different hours: based on the processed mobile phone user location data falling in the blocks, and by taking the number of users and user density as basic processing units, inputting, in two kinds of dimensions such as an hour dimension and a day dimension, block data into ArcGIS as a basic analysis database; performing spatial distribution trend analysis of the number of located mobile phone users in each block in the whole city through the Kriging interpolation method in ArcGIS, to obtain a basic circle trend diagram of population-based spatial structure distribution in the whole city on different hours and on different days; on the basis of this diagram, excluding an exceptional value, performing manual detection, and deleting some errors, to obtain a relatively accurate circle division diagram; and in addition, performing space superposition of the diagram and the land blocks of the whole city, where after correction and superposition of the two aspects, an analysis basis of the dynamic urban structure is obtained, and such an operation lays the foundation for the next step, where the user density = the number of users in each block/the basal area of the block;

(6) identifying the circles of the dynamic urban spatial structure: obtaining a value of distribution density of mobile phone users in each circle according to the distribution situation of the number of mobile phone users in each basic circle in the previous step; and in addition, performing statistical analysis for a change rule of this value, and calculating percentages of change trends of values of user distribution density in two adjacent circles, to find numerical inflection points, which are critical values for division of the circles of the dynamic urban spatial structure; and

(7) outputting and analyzing the circles of the dynamic urban spatial structure: outputting a structural diagram of circles obtained on each hour and on each working day in a two-dimensional diagram in a visible and vectorized manner through ArcGIS, to obtain a change trend of the circles of the dynamic urban spatial structure; and then performing comparison and analysis to find a change rule and predict a future change situation.

2. The method for defining circles of a dynamic urban spatial structure according to claim 1, wherein the contents of the data collected in step (1) comprise the following information: an anonymous encrypted mobile phone terminal ID, signaling occurring time, a serving base station during signaling occurrence, and the like; the types of the data comprise: turning on/off the mobile phone, sending/receiving an SMS message, calling, being called, location updating, cell switching, and Internet accessing.

3. The method for defining circles of a dynamic urban spatial structure according to claim 1, wherein in step (4), in a case in which it is difficult to count and identify users on a road, the users are divided in number into land blocks on two sides along a central line of the road.

Collect mobile phone user
location data

Data of base station cells for
mobile phones, and land
block data of a whole city

Filter mobile phone user
location data

Match mobile phone user location
data on each hour to a base station
cell, to obtain matched mobile phone
location data of the base station cell

Allocate the numbers of users
under the base stations to the land
blocks, to obtain mobile phone
location data in each block

Obtain a multi-circle numerical rule
on each hour based on the matched
mobile phone user location data

Merge circles within a same region
according to numerical critical
points

Obtain dynamic circles of a dynamic
urban spatial structure on the hours

**FIG.1**

**FIG.2**

**FIG.3**

**FIG.4**

**FIG.5**

**FIG.6**

# INTERNATIONAL SEARCH REPORT

International application No.

**PCT/CN2016/081389**

## A. CLASSIFICATION OF SUBJECT MATTER

G06Q 50/26 (2012.01) i

According to International Patent Classification (IPC) or to both national classification and IPC

## B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

WPI, EPODOC, CNPAT, CNKI: circle layer, portable, location, base station, urban, city, circle, layer, cellphone, cellular, mobile, phone, base, station, section, region, zone, Thiessen, Kriging, ArcGIS

## C. DOCUMENTS CONSIDERED TO BE RELEVANT

| Category* | Citation of document, with indication, where appropriate, of the relevant passages | Relevant to claim No. |
|---|---|---|
| A | CN 102609616 A (SHANGHAI MEIHUI SOFTWARE CO., LTD.), 25 July 2012 (25.07.2012), abstract, description, paragraphs [0009]-[0025], and figure 1 | 1-3 |
| A | CN 102111874 A (YANG, Huai), 29 June 2011 (29.06.2011), the whole document | 1-3 |
| A | CN 104102845 A (BEIJING KUNCHENG TECHNOLOGY CO., LTD.), 15 October 2014 (15.10.2014), the whole document | 1-3 |
| A | CN 104636611 A (SHANGHAI YI-XING INFO TECH CO., LTD.), 20 May 2015 (20.05.2015), the whole document | 1-3 |
| A | CN 105023230 A (JINAN MUNICIPAL ENGINEERING DESIGN & RESEARCH INSTITUTE (GROUP) CO., LTD.), 04 November 2015 (04.11.2015), the whole document | 1-3 |
| A | US 2014031004 A1 (TELEFONICA S.A.), 30 January 2014 (30.01.2014), the whole document | 1-3 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 October 2016 (21.10.2016) | **11 November 2016 (11.11.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**DAI, Lei**<br><br>Telephone No.: (86-10) **62414073** |

Form PCT/ISA/210 (second sheet) (July 2009)

## INTERNATIONAL SEARCH REPORT
Information on patent family members

International application No.

**PCT/CN2016/081389**

| Patent Documents referred in the Report | Publication Date | Patent Family | Publication Date |
|---|---|---|---|
| CN 102609616 A | 25 July 2012 | None | |
| CN 102111874 A | 29 June 2011 | None | |
| CN 104102845 A | 15 October 2014 | None | |
| CN 104636611 A | 20 May 2015 | None | |
| CN 105023230 A | 04 November 2015 | None | |
| US 2014031004 A1 | 30 January 2014 | US 8639213 B1 | 28 January 2014 |

Form PCT/ISA/210 (patent family annex) (July 2009)